# FASCICULE DE BREVET EUROPEEN

(11) **EP 3 217 025 B1**
(45) Date de publication et mention de la délivrance du brevet: **19.06.2019**
(21) Numéro de dépôt: 17159633.1
(22) Date de dépôt: 07.03.2017
(51) Int. Cl.: F16B 12/26, F16B 7/04

(54) **ENSEMBLE DE GUIDAGE ET FIXATION COMPORTANT UN SYSTÈME DE FIXATION PERMANENTE D'UN PREMIER PANNEAU À UN DEUXIÈME PANNEAU ADJACENT ET UNE CHARNIÈRE, MEUBLE COMPORTANT UN TEL ENSEMBLE ET PROCÉDÉ DE MONTAGE D'UN TEL MEUBLE**
FÜHRUNGS- UND BEFESTIGUNGSVORRICHTUNG MIT EINEM SYSTEM ZUR BEFESTIGUNG EINES ERSTEN PANELS AN EINEM ZWEITEN BENACHBARTEN PANEL UND EINEM SCHARNIER, MÖBEL MIT EINER SOLCHEN VORRICHTUNG UND VERFAHREN ZUR MONTAGE EINES SOLCHEN MÖBELS
GUIDING AND FIXING ASSEMBLY HAVING A SYSTEM FOR PERMANENTLY ATTACHING A FIRST PANEL TO A SECOND ADJACENT PANEL AND A HINGE, A FURNITURE COMPRISING SUCH A ASSEMBLY AND METHOD FOR MOUNTING SUCH A FURNITURE

(30) Priorité: 07.03.2016 FR 1651882
(43) Date de publication de la demande: 13.09.2017
(73) Titulaire: Pithoud, Lionel, 75017 Paris (FR); Monchablon, Laurent, 55400 Chatillon Sous les Cotes (FR)
(72) Inventeur: Pithoud, Lionel, 75017 Paris (FR); Monchablon, Laurent, 55400 Chatillon Sous les Cotes (FR)
(74) Mandataire: Santarelli

(56) Documents cités:
- WO-A1-2015/065170
- DE-A1- 3 514 276
- US-A- 4 357 744
- US-A- 4 628 582
- US-A1- 2014 305 064

## Description

La présente demande concerne principalement un ensemble de guidage et fixation pour fixer un premier panneau à un deuxième panneau.

Elle concerne notamment un meuble, tel que par exemple un meuble à monter voire à assembler par un utilisateur, comportant un tel ensemble de guidage et fixation pour relier deux parois adjacentes du meuble ainsi qu'un procédé de montage d'un tel meuble.

Le document US 4 357 744 A divulgue un ensemble de fixation pour relier deux parois adjacentes.

De façon générale, lorsqu'un meuble est livré, il l'est soit en pièces détachées accompagnées d'une multitude d'éléments de fixation pour monter le meuble, soit déjà intégralement monté.

Dans le premier cas, le montage du meuble requiert généralement un temps de main d'oeuvre particulièrement important et parallèlement, les éléments de fixation peuvent être facilement égarés et/ou cassés. En outre, différents outils sont alors nécessaires.

Dans le deuxième cas, la livraison du meuble requiert alors un volume important ce qui peut poser des difficultés d'acheminement et a une influence directe sur le coût de transport correspondant.

Il serait donc intéressant de pouvoir transporter des meubles sans qu'ils aient à être montés au préalable tout en minimisant le nombre d'éléments de fixation et d'outils nécessaires à leur montage.

L'objet de la présente demande vise donc à répondre, au moins en partie aux objectifs précités, menant en outre à d'autres avantages.

A cet effet, est proposé selon un premier aspect, un ensemble de guidage et fixation, comportant un système de fixation permanente pour meuble et une charnière, le système de fixation permanente étant configuré pour lier rigidement un premier panneau à un deuxième panneau du meuble dans une position montée, le système de fixation permanente comportant au moins une première pièce, configurée pour être fixée au premier panneau, et une deuxième pièce, configurée pour être fixée au deuxième panneau et s'emboîter dans la première pièce,
- la première pièce comportant :
   ∘ un corps comportant au moins une première face,
   ∘ un logement de réception d'un premier harpon de la deuxième pièce, le logement étant creusé depuis la première face du corps de la première pièce et s'étendant dans le corps de la première pièce, le logement comportant une butée de retenue du premier harpon, configurée pour retenir le premier harpon de façon permanente après emboîtage, et un compartiment d'accueil d'une tête du premier harpon formé entre un fond du logement et la butée, et
   ∘ un système de retenue de la première pièce au premier panneau formé sur au moins une face du corps de la première pièce distincte de la première face,
- la deuxième pièce comportant :
   ∘ un corps comportant au moins une première face,
   ∘ au moins le premier harpon configuré pour s'emboîter dans le logement de réception de la première pièce, le premier harpon étant en saillie depuis la première face du corps de la deuxième pièce et comportant au moins une tête et un bras relié à la première face et qui soutient la tête, et la tête comportant au moins une aile configurée pour être rabattue lors de l'insertion de la tête dans le logement et pour se redéployer lorsque la tête est dans le compartiment d'accueil du logement,
   ∘ un système de retenue de la deuxième pièce au deuxième panneau formé sur au moins une face du corps de la deuxième pièce distincte de la première face,
- la charnière étant configurée pour guider à pivotement une insertion du premier harpon de la deuxième pièce dans le logement de réception correspondant de la première piéce, le premier harpon et le logement de réception étant courbés respectivement dans le plan de coupe perpendiculaire à au moins une face du corps de la première pièce et à au moins une face du corps de la deuxième pièce.

Un tel ensemble de guidage et fixation associe donc possiblement les deux fonctions suivantes :
- Il fait office de charnière de liaison entre deux panneaux.
- Il assure l'assemblage et la fixation des deux panneaux l'un à l'autre.

Selon un exemple de réalisation, le logement s'étend le long de toute une longueur de la première pièce ou le logement est formé de plusieurs compartiments répartis, régulièrement ou irrégulièrement, le long de la longueur de la première pièce.

Selon un autre exemple de réalisation, le premier harpon de la deuxième pièce s'étend le long de toute une longueur de la deuxième pièce, en concordance avec le logement correspondant, ou est formé de plusieurs tronçons répartis, régulièrement ou irrégulièrement, le long de la longueur de la deuxième pièce.

En d'autres termes le logement comporte au moins un compartiment et le premier harpon comporte au moins un tronçon configuré pour coopérer avec un compartiment.

Ainsi, au choix, plusieurs tronçons peuvent coopérer avec un même compartiment ou un compartiment peut ne recevoir aucun tronçon.

Dans un exemple de réalisation particulier, le système de fixation comporte autant de compartiments que de tronçon, chaque compartiment recevant un tronçon une fois le système de fixation monté.

En particulier, le logement comporte une butée de retenue du premier harpon, la butée étant configurée pour empêcher une extraction du premier harpon une fois que celui-ci a été inséré dans le logement, voire notamment une fois que le premier harpon a atteint une position prédéterminée.

Par exemple, la butée est formée par un rétrécissement d'une section du logement.

Et par exemple, le premier harpon comporte au moins une aile, voire deux ailes, l'au moins une aile étant configurée pour pouvoir être rabattue de sorte qu'en insérant le premier harpon dans le logement, l'aile est resserrée en passant à travers la section du logement formant la butée et une fois l'aile sortie au-delà de la butée, elle revient dans une configuration déployée telle qu'une extrémité libre de l'aile est retenue en appui sur la butée.

La position prédéterminée du premier harpon dans le logement est par exemple une profondeur du premier harpon dans le logement à laquelle au moins une aile du premier harpon est passée au-delà de la butée.

Par exemple, le logement comporte au moins un compartiment d'accueil d'une tête de harpon délimité d'une part par la butée, et d'autre part par un fond du logement.

Selon un exemple de réalisation intéressant, le système de fixation permanente comporte la charnière.

Et dans un exemple de réalisation privilégié, la charnière, la première pièce et la deuxième pièce sont formées d'un seul tenant.

Un tel ensemble de guidage et fixation est ainsi facilement réalisé par moulage ou extrusion par exemple. Il est alors possible de réaliser un ensemble de guidage et fixation de n'importe quelle longueur.

Il est par exemple réalisé en matériau plastique et/ou métallique selon les besoins.

Selon un exemple particulièrement intéressant, la charnière comporte un voile.

De préférence, le voile et au moins une partie de la première pièce et au moins une partie de la deuxième pièce sont extrudés ensemble par injection.

La charnière, formée d'un voile le cas échéant, est possiblement réalisée dans un matériau différent tout en étant réalisée, de préférence, simultanément avec au moins une partie des deux pièces du système de fixation qu'elle relie. Elle peut toutefois, bien entendu, être réalisée dans le même matériau que les autres pièces du système de fixation.

Selon un exemple de réalisation privilégié, le système de retenue de la première pièce au premier panneau comporte une surface présentant une géométrie de rétention axiale unidirectionnelle.

Une géométrie de rétention axiale unidirectionnelle désigne ici une forme telle qu'il est par exemple possible d'insérer la pièce (dont la surface présente une telle géométrie) facilement dans un trou configuré à cet effet mais qu'il est ensuite très difficile voire impossible de l'en retirer sans détériorer voire détruire au moins une partie de la pièce, ou du panneau, de sorte qu'ultérieurement la géométrie de la surface ne serait plus capable de remplir son rôle de retenue.

Par exemple, une géométrie de rétention axiale unidirectionnelle est formée sur une surface extérieure par une succession de pans inclinés divergent à partir d'une extrémité apicale et de pans « droits » dont une normale extérieure est colinéaire à un sens selon lequel un blocage est souhaité ; l'extrémité apicale étant l'extrémité destinée à être enfoncée en premier dans un trou configuré à cet effet de sorte qu'une fois le pion dans le trou il est très difficile voire impossible de l'en extraire pour les raisons susmentionnées.

Par exemple, le système de retenue de la deuxième pièce au deuxième panneau comporte une surface présentant une géométrie de rétention axiale unidirectionnelle.

Selon un exemple de réalisation intéressant, la deuxième pièce comporte une première partie et une deuxième partie,
- la première partie comportant :
   ∘ un corps présentant une première face et une deuxième face,
   ∘ le premier harpon en saillie depuis la première face du corps de la première partie,
   ∘ un deuxième harpon configuré pour s'emboîter dans un logement de réception de la deuxième partie, le deuxième harpon étant en saillie depuis la deuxième face du corps de la première partie et comportant au moins une tête et un bras relié à la deuxième face et qui soutient la tête, et la tête comportant au moins une aile configurée pour être rabattue lors de l'insertion de la tête dans le logement de la deuxième partie et pour se redéployer lorsque la tête est dans un compartiment d'accueil du logement de la deuxième partie et
- la deuxième partie comportant :
   ∘ un corps comportant au moins une première face,
   ∘ le logement de réception du deuxième harpon de la première partie, le logement étant creusé depuis la première face du corps de la deuxième partie et s'étendant dans le corps de la deuxième partie, le logement comportant une butée de retenue du deuxième harpon, configurée pour retenir le deuxième harpon de façon permanente après emboîtage, et le compartiment d'accueil de la tête du deuxième harpon formé entre un fond du logement et la butée, et
   ∘ le système de retenue de la deuxième pièce au deuxième panneau formé sur au moins une face du corps de la deuxième partie distincte de la première face.

Dans un exemple de réalisation, la première face du corps de la première partie est distincte de la deuxième face du corps de la première partie.

Et dans un exemple particulier, le premier harpon et le deuxième harpon de la première partie de la deuxième pièce sont dos à dos.

Dans un exemple de mise en oeuvre, l'ensemble de guidage et fixation comporte en outre un premier panneau fixé à la première pièce et un deuxième panneau fixé à la deuxième pièce.

Est également proposé, selon un deuxième aspect, un meuble comportant au moins un ensemble de guidage et fixation qui comporte au moins une partie des caractéristiques décrites précédemment.

Le meuble comporte une première paroi, formant un premier panneau relié à la première pièce du système de fixation permanente, et une deuxième paroi, adjacente à la première paroi et formant un deuxième panneau relié à la deuxième pièce du système de fixation permanente, et la première paroi et la deuxième paroi sont reliées par la charnière.

En effet, un ensemble de guidage et fixation comportant au moins une partie des caractéristiques précédemment décrites est ainsi particulièrement commode et adapté pour tous types de meubles, en particulier de meubles de rangement, comme par exemple une armoire de rangement, possiblement ouverte par devant et/ou à portes et/ou à tiroirs.

Un tel meuble peut ainsi avoir tous types de dimensions en hauteur et/ou en largeur et/ou en profondeur.

Selon un exemple de réalisation, un ensemble de guidage et fixation tel que décrit précédemment est inséré à chaque jonction entre deux parois adjacentes.

Par exemple, un ensemble de guidage et fixation est inséré à chaque angle du meuble et raccorde ainsi par exemple une base du meuble, deux cotés et un dessus, reliant ainsi quatre parois latérales les unes aux autres.

Deux pièces de chaque système de fixation viennent alors s'accrocher l'une à l'autre.

Selon un exemple de réalisation particulier, le système de fixation voire l'ensemble de guidage et fixation s'étend le long d'une tranche, ou d'une face, d'une paroi selon les besoins d'assemblage de la paroi considérée à une autre paroi. Si nécessaire, la tranche peut être biaisée par rapport aux faces principales de la paroi considérée, ces faces principales étant également appelées recto et verso.

Chaque système de fixation voire ensemble de guidage et fixation s'étend possiblement en laissant une distance de quelques millimètres, par exemple au moins 5 mm, voire 10 mm, voire 15 mm, par rapport à au moins un bord depuis lequel il s'étend. Ceci permet par exemple d'éviter que le système de fixation voire l'ensemble de guidage et fixation soit visible d'un extérieur de la paroi une fois le meuble monté.

Selon les besoins, le système de fixation voire l'ensemble de guidage et fixation peut ainsi s'étendre le long de tout ou d'une partie seulement d'une tranche, ou d'une face, d'une paroi.

Par exemple, la deuxième pièce s'étend en continu le long d'une partie ou de toute une tranche, ou d'une face, d'une paroi correspondante tandis que la première pièce est par exemple soit formée de plusieurs tronçons répartis en vis-à-vis de la deuxième pièce soit formée d'un seul tronçon s'étendant sur une longueur au maximum égale à celle de la deuxième pièce le long de la tranche, ou face, de la paroi correspondante.

Par exemple, « tout le long d'une tranche/face » ou « le long de toute une tranche/face » sont ici deux expressions équivalentes signifiant qu'au moins l'une des pièces du système de fixation permanente s'étend sur au moins 80%, voire 90%, voire 95% de la longueur d'une tranche/face de la paroi à laquelle la pièce considérée est attachée.

Au choix, les différents ensembles de guidage et fixation présents au sein d'un même meuble sont tous identiques ou au moins l'un peut être différent des autres voire, les ensembles de guidage et fixation sont tous différents les uns des autres.

Un meuble muni de tels ensembles de guidage et fixation peut ainsi être plié selon de très nombreuses possibilité, selon comment les parois sont fractionnées et les ensembles de guidage et fixation positionnés.

Un tel meuble peut ainsi par exemple être livré à plat, c'est-à-dire avec par exemple une première paroi et une deuxième paroi disposées parallèlement à une troisième paroi et une quatrième paroi, et se monter sans outils ni quincaillerie d'ameublement, simplement en le redressant. C'est-à-dire alors en mettant par exemple la première paroi orthogonale à la deuxième paroi, elle-même alors orthogonale à la fois à la première paroi et la troisième paroi, elle-même alors orthogonale à la deuxième paroi et la quatrième paroi, elle-même alors orthogonale à la troisième paroi et la première paroi.

Ainsi, par exemple, dans un exemple de réalisation d'un meuble à quatre parois reliées les unes aux autres par quatre ensembles de guidage et fixation tels que décrits précédemment dans le cadre de la présente demande, le meuble en configuration pliée représente alors un losange plat puis représente un rectangle une fois en configuration redressée.

Selon une option intéressante, un dos du meuble est ultérieurement fixé aux autres parois par un système d'attache par enclenchement ce qui permet d'assurer un équerrage entre les parois et une stabilité du meuble.

Selon un exemple privilégié, le système d'attache par enclenchement comporte un élément dit « à double queue de sapin ».

Un élément à double queue de sapin est en particulier un élément comportant deux branches qui sont inclinées l'une par rapport à l'autre, par exemple à 90°.

Chaque branche comporte une surface extérieure présentant une géométrie de rétention axiale unidirectionnelle, c'est-à-dire qu'il est par exemple possible d'insérer la banche facilement dans un trou configuré à cet effet mais qu'il est ensuite très difficile voire impossible de l'en retirer sans détériorer voire détruire au moins une partie de la branche de sorte qu'ultérieurement la géométrie de la surface extérieure ne serait plus capable de remplir son rôle de retenue.

Une branche dont la surface extérieure présente une géométrie de rétention axiale unidirectionnelle est par exemple un pion dont la surface extérieure présente une succession de pans inclinés divergent à partir d'une extrémité apicale du pion et de pans « droits » dont une normale extérieure est colinéaire à un sens selon lequel un blocage est souhaité ; l'extrémité apicale étant l'extrémité destinée à être enfoncée en premier dans le trou configuré à cet effet de sorte qu'une fois le pion dans le trou il est très difficile voire impossible de l'en extraire selon les raisons susmentionnées.

Par exemple, au moins une partie de la branche présente une symétrie de révolution.

Un tel élément est de préférence monobloc.

Un tel élément est par exemple de préférence en plastique et/ou en métal.

Il s'agit donc d'un aspect original en soi de la présente invention.

Ainsi, afin de mieux assurer un équerrage entre des parois et/ou une stabilité d'un meuble, est proposé un système d'attache par enclenchement comportant un élément dit « à double queue de sapin » présentant au moins une partie des caractéristiques susmentionnées et/ou un meuble dont une paroi est fixée à une autre paroi inclinée par rapport à elle grâce à un tel système d'attache, chacune des branches du système d'attache étant enfoncée dans un trou prévu à cet effet ménagé dans chacune des parois.

Dans un autre exemple de réalisation d'un meuble comportant quatre parois latérales et une paroi dorsale, chacune des parois latérales est possiblement reliée à la paroi dorsale par un ensemble de guidage et fixation comportant au moins une partie des caractéristiques précédemment décrites.

Est également proposé, selon un troisième aspect, un procédé de montage d'un meuble comportant au moins une partie des caractéristiques précitées. Le procédé comporte par exemple :
- Une étape de redressement par pivotement d'au moins la première paroi par rapport à la deuxième paroi adjacente à la première paroi ; et
- Une étape d'encliquetage du premier harpon de la deuxième pièce du système de fixation permanente dans le logement de la première pièce du système de fixation permanente.

La première paroi et la deuxième paroi sont reliées l'une à l'autre par un ensemble de guidage et fixation, la première paroi est par exemple attachée à une première pièce du système de fixation permanent et la deuxième paroi est par exemple attachée à une deuxième pièce du système de fixation permanente.

Grâce au système de fixation qui est un mécanisme très simple, il est possible de ne plus utiliser qu'un maillet ou un marteau pour monter un meuble livré par exemple plié.

Selon un exemple de mis en oeuvre, le redressement de la première paroi par rapport à la deuxième paroi comporte un équerrage de la première paroi par rapport à la deuxième paroi.

Selon un exemple de mise en oeuvre, le procédé comporte une étape préalable d'attache d'une pièce parmi la première pièce et la deuxième pièce du système de fixation permanente à l'une de la première paroi ou de la deuxième paroi, l'étape préalable comportant une étape d'enfoncement du système de retenue de la pièce dans une rainure formée dans la paroi correspondante.

Un ensemble de guidage et fixation tel que décrit précédemment permet donc d'emballer un meuble, par exemple un meuble de rangement, à plat, réduisant ainsi le volume et les coûts de transport associés de façon très importante par rapport à un même meuble « monobloc » préalablement monté ; le simple accrochage d'une pièce du système de fixation dans une autre assurant parallèlement un montage en un temps très court.

Un tel ensemble de guidage et fixation s'applique donc aussi bien aux meubles de rangements pour particuliers qu'au mobilier destiné au monde du bureau.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre schématiquement une section d'un ensemble de guidage et fixation selon un premier exemple de réalisation qui ne fait pas partie de l'invention dans une position ouverte,
La figure 2 montre schématiquement l'ensemble de guidage et fixation de la figure 1 en position verrouillée,
Les figures 3 et 4 présentent deux variantes de réalisation du mode de réalisation selon l'invention en position verrouillée,
La figure 5 montre schématiquement une section d'un ensemble de guidage et fixation selon un deuxième exemple de réalisation de la présente invention dans une position ouverte,
La figure 6 montre schématiquement une section d'un ensemble de guidage et fixation selon un troisième exemple de réalisation de la présente invention dans une position ouverte,
La figure 7 montre schématiquement en perspective un système de fixation selon un quatrième exemple de réalisation de la présente invention dans une position ouverte,
La figure 8 montre schématiquement en perspective un ensemble de guidage et fixation selon un exemple qui ne fait pas partie de l'invention invention dans une position ouverte,
La figure 9 présente en perspective une coupe de deux parois adjacentes reliées par un ensemble de guidage et fixation dont une section est conforme à celle représentée sur la figure 3, une première pièce et une deuxième pièce système de fixation s'étendant tout le long d'une tranche de la paroi correspondante,
La figure 10 présente en perspective deux parois adjacentes reliées par un ensemble de guidage et fixation dont une section est conforme à celle représentée sur la figure 1, le système de fixation comportant deux tronçons identiques répartis le long d'une tranche de la paroi correspondante,
La figure 11 présente un meuble selon un exemple de réalisation de la présente invention, le meuble comportant quatre parois, deux parois adjacentes étant reliées entre elles par un ensemble de guidage et fixation selon un exemple de réalisation de la présente invention,
La figure 12 présente un meuble selon un autre exemple de réalisation de la présente invention, deux parois étant reliées à d'autres par un système d'attache par enclenchement, et
Les figures les figures 13 à 16 illustrent les principales étapes d'un exemple de montage d'un meuble selon un autre exemple de réalisation.

Les éléments identiques représentés sur les figures précitées sont identifiés par des références numériques identiques.

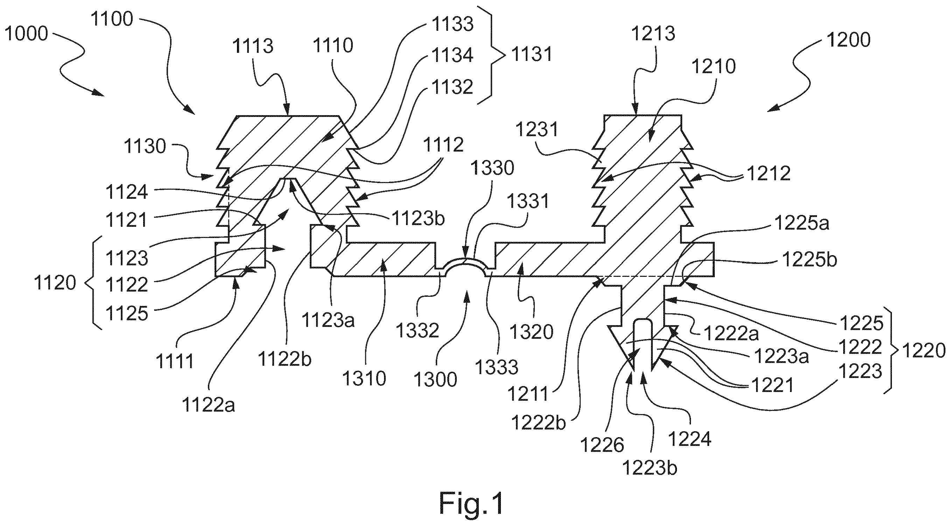

La figure 1 montre schématiquement une section d'une coupe d'un ensemble de guidage et fixation qui comporte un système de fixation 1000 selon un premier exemple de réalisation qui ne fait pas partie de l'invention dans une position ouverte.

Le système de fixation 1000 comporte une première pièce 1100 et une deuxième pièce 1200.

La première pièce 1100 et la deuxième pièce 1200 sont au moins en partie complémentaires de sorte que la deuxième pièce est configurée pour s'emboîter, s'encliqueter, dans la première pièce, c'est-à-dire que la première pièce et la deuxième pièce sont configurées pour pouvoir être solidarisées l'une à l'autre.

De plus, tout détachement ultérieur de la deuxième pièce par rapport à la première pièce est alors très difficile voire impossible sans détériorer au moins en partie l'une des pièces.

La première pièce 1100 comporte principalement un corps 1110.

Ici, le corps 1110 comporte une première face 1111 destinée à être en vis-à-vis de la deuxième pièce, deux faces latérales 1112 et un fond 1113 opposé à la première face 1111.

Ici, le corps a une section globalement rectangulaire ce qui permet une réalisation particulièrement simple et un ancrage satisfaisant dans un premier panneau.

Ainsi, la première face 1111 est donc ici considérée parallèle au fond 1113 et les deux faces latérales 1112 sont donc ici considérées parallèles l'une à l'autre et orthogonales à la première face 1111 et au fond 1113.

La première pièce 1100 comporte un logement 1120 de réception d'un premier harpon 1220 de la deuxième pièce 1200.

Le logement 1120 est creusé dans le corps 1110 depuis la première face 1111.

Ici, le logement 1120 présente en particulier une forme complémentaire du premier harpon 1220.

Le logement 1120 comporte principalement une butée 1121 qui est une butée configurée pour retenir le premier harpon 1220 et en empêcher toute extraction une fois que celui-ci a été inséré dans le logement 1120.

Pour cela, la butée 1121 est ici formée à une interface entre une partie du logement formant un guide d'insertion du harpon, désignée ici par « partie de guidage 1122 », et une partie du logement formant un compartiment d'accueil pour une tête 1223 du premier harpon 1220, désigné ici « compartiment d'accueil 1123 ». A cette interface, une section de la partie de guidage 1122 est plus petite qu'une section du compartiment d'accueil 1123.

En particulier dans cet exemple de réalisation, l'interface est comprise dans un plan qui est parallèle à la fois au fond 1113 et à la première face 1111.

Dans cet exemple de réalisation, la partie de guidage 1122 est considérée comme droite et de section constante selon une profondeur du logement, c'est-à-dire selon une direction partant de la première face 1111 vers un fond 1124 du logement, formé au fond du compartiment d'accueil 1123.

Ici, le fond 1124 du logement 1120 est ainsi plat et parallèle à la première face 1111, au fond 1113 du corps 1110 ainsi qu'au plan comportant l'interface susmentionnée.

La partie de guidage 1122 comporte deux parois de guidage 1122a et 1122b qui sont ici planes et parallèles l'une à l'autre. En outre, les parois de guidage 1122a et 1122b sont également parallèles aux faces latérales 1112 du corps 1110.

Le compartiment d'accueil 1123 a ici une section de forme triangulaire tronquée comportant une base 1123a et une pointe tronquée 1123b.

La base 1123a est donc située à l'interface entre la partie de guidage 1122 et le compartiment d'accueil 1123 et forme ici la butée 1121, et la pointe tronquée 1123b forme ainsi le fond 1124 du logement.

Le logement 1120 comporte en outre ici une partie évasée 1125 qui s'étend entre la partie de guidage 1122 et la première face 1111.

Autrement dit, la partie de guidage 1122 se situe donc entre la partie évasée 1125 et le compartiment d'accueil 1123.

La partie évasée 1125 s'élargie depuis la partie de guidage 1122 vers la première face 1111.

La partie évasée 1125 sert ainsi non seulement à amorcer un guidage de la tête 1223 du premier harpon 1220 vers la partie de guidage 1122 mais également à positionner précisément la deuxième pièce 1200 par rapport à la première pièce 1100 une fois qu'elles sont emboîtées grâce à une forme complémentaire 1225 de la deuxième pièce 1200 qui est décrite ultérieurement.

La première pièce 1100 comporte également un système de retenue 1130 configuré pour fixer et retenir la première pièce 1100 dans un premier panneau.

Le système de retenue 1130 comporte ici les deux faces latérales 1112 qui présente une géométrie de rétention axiale unidirectionnelle.

Le système de retenue 1130 pourrait bien entendu ne comporter qu'une seule des faces latérales 1112 ou bien seule l'une des faces pourrait présenter une géométrie de rétention axiale unidirectionnelle mais un tel système serait moins performant.

Autrement dit, la présence d'une géométrie de rétention axiale unidirectionnelle sur les deux faces latérales, qui sont donc en vis-à-vis opposée l'une à l'autre, assure un meilleur ancrage de la première pièce 1100 dans le premier panneau auquel elle est destinée.

Une géométrie de rétention axiale unidirectionnelle désigne ici une géométrie qui permet une insertion facile de la pièce selon une direction dans un premier sens mais rend très difficile voire empêche totalement une extraction de la pièce selon cette direction dans un deuxième sens opposé au premier sens.

A cet effet, une géométrie de rétention axiale unidirectionnelle comporte ici au moins une dent 1131. Une telle dent 1131 forme par exemple une nervure anti-retour. Par exemple, la dent 1131 comporte une surface plane 1132 orthogonale à la direction d'insertion/extraction et une surface inclinée 1133 depuis un sommet 1134 de la dent vers le fond de la première pièce. Ainsi, une normale extérieure à la surface plane 1132 de la dent est colinéaire au deuxième sens susmentionné selon lequel on souhaite empêcher une extraction de la pièce.

Dans le présent exemple de réalisation, chaque face latérale 1112 comporte ainsi une succession de dents 1131 pour favoriser une retenue de la première pièce 1100 dans le premier panneau.

La succession de dents 1131 est également nommée «en toits d'usine » ou « en queue de sapin » par exemple.

La deuxième pièce 1200, quant à elle, comporte principalement un corps 1210.

Ici, le corps 1210 comporte une première face 1211 destinée à être en vis-à-vis de la première pièce, deux faces latérales 1212 et un fond 1213 opposé à la première face 1211.

Ici, le corps a une section globalement rectangulaire ce qui permet une réalisation particulièrement simple et un ancrage satisfaisant dans un deuxième panneau.

Ainsi, la première face 1211 est donc ici considérée parallèle au fond 1213 et les deux faces latérales 1212 sont donc ici considérées parallèles l'une à l'autre et orthogonales à la première face 1211 et au fond 1213.

La deuxième pièce 1200 comporte un premier harpon 1220, configuré pour s'insérer et s'emboîter dans le logement 1120 de la première pièce 1100.

Le premier harpon 1220 est en saillie depuis la première face 1211 du corps 1210 de la deuxième pièce 1200.

Ici, le premier harpon 1220 présente en particulier une forme complémentaire du logement 1120.

Le premier harpon 1220 comporte principalement la tête 1223 précitée et un bras 1222 soutenant la tête 1223.

Dans cet exemple de réalisation, le premier harpon 1220 est considéré comme droit, comme le logement 1120, c'est-à-dire qu'un plan médian de la section du premier harpon 1220 représentée figure 1 est ici orthogonal à la première surface 1211.

Le bras 1222 comporte deux parois latérales 1222a et 1222b qui sont ici planes et parallèles l'une à l'autre. En outre, les parois latérales 1222a et 1222b sont également parallèles aux faces latérales 1212 du corps 1210.

La tête 1223 a ici une section en forme de flèche pleine tronquée comportant une base 1223a et une pointe tronquée 1223b.

La base 1223a est donc située à une interface entre le bras 1222 et la tête 1223, et la pointe tronquée 1223b forme ainsi une extrémité apicale 1224 du premier harpon 1220.

La base 1223a de la tête 1223 présente une section supérieure à celle du bras 1222 au niveau de cette interface de sorte que la base 1223a de la tête 1223 coopère avec la butée 1121 du logement 1220 pour empêcher toute extraction du premier harpon 1220 une fois que celui-ci a été inséré dans le logement 1120.

En particulier dans cet exemple de réalisation, l'interface entre le bras 1222 et la tête 1223 est comprise dans un plan qui est parallèle à la première face 1211 de la deuxième pièce 1200.

Le premier harpon 1220 comporte en outre une rainure 1226 creusée à partir de l'extrémité apicale 1224 et qui s'étend jusque dans au moins une partie du bras.

Une telle rainure 1226 permet de former deux ailes 1221 dans la tête 1223 comportant une flexibilité structurelle en flexion de sorte à pouvoir se rapprocher l'une de l'autre lors du passage de la tête 1223 dans la partie de guidage 1122 du logement 1120.

Le premier harpon 1220 comporte en outre ici un socle évasé 1225 qui s'étend entre le bras 1222 et la première face 1211.

Autrement dit, le bras 1222 se situe donc entre le socle évasé 1225 et la tête 1223.

Le socle évasé 1225 s'élargie depuis le bras 1222 vers la première face 1211.

En particulier ici, le socle évasé 1225 présente une section qui est un quadrilatère, en particulier un trapèze isocèle.

Le trapèze isocèle comporte ainsi une grande base formée par une partie de la première face 1211, une petite base, parallèle à la grande base, formée par une surface plane 1225a depuis laquelle s'étend le bras 1222 et deux pans inclinés 1225b reliant la grande base à la petite base de chaque côté.

En outre, dans le présent exemple de réalisation, le bras 1222 est centré sur la surface plane 1225a.

Le socle évasé 1225 forme ainsi la forme complémentaire précitée qui sert à positionner précisément la deuxième pièce 1200 par rapport à la première pièce 1100 une fois qu'elles sont emboîtées, le socle évasé 1225 coïncidant avec la partie évasée 1125 de la première pièce 1100 décrite précédemment.

Le logement 1120 et le premier harpon 1220 présente donc ici un plan de symétrie qui est orthogonal au plan de la figure 1.

La deuxième pièce 1200 comporte également un système de retenue 1230 configuré pour fixer et retenir la deuxième pièce 1200 dans un deuxième panneau, distinct du premier panneau.

Dans le présent exemple de réalisation, le système de retenue 1230 comporte ici les deux faces latérales 1212 qui présente une géométrie de rétention axiale unidirectionnelle.

Le système de retenue 1230 pourrait bien entendu ne comporter qu'une seule des faces latérales 1212 ou bien seule l'une des faces 1212 pourrait présenter une géométrie de rétention axiale unidirectionnelle mais un tel système serait moins performant.

Autrement dit, la présence d'une géométrie de rétention axiale unidirectionnelle sur les deux faces latérales, qui sont donc en vis-à-vis opposée l'une à l'autre, assure un meilleur ancrage de la deuxième pièce 1200 dans le deuxième panneau auquel elle est destinée.

Dans cet exemple, la géométrie de rétention axiale unidirectionnelle du système de retenue 1230 comporte également au moins une dent 1231 du même type que la dent 1131 précitée, et même plus particulièrement ici chaque face latérale 1212 comporte une succession de dents 1231, de même que précédemment en lien avec la première pièce pour favoriser une retenue de la deuxième pièce 1200 dans le deuxième panneau.

Dans l'exemple de réalisation de la figure 1, la première pièce et la deuxième pièce sont reliées l'une à l'autre par une charnière 1300.

Pour cela, la charnière 1300 comporte de manière générale un premier membre 1310 et un deuxième membre 1320 réunis par une liaison pivot 1330.

Le premier membre 1310 relie ici la liaison pivot 1330 à la première pièce 1100 et le deuxième membre 1320 relie ici la liaison pivot 1330 à la deuxième pièce 1200.

Plus particulièrement, dans cet exemple de réalisation, le premier membre 1310 est un bras rectiligne d'épaisseur constante qui s'étend depuis une face latérale 1112 de la première pièce dans un prolongement de la première face 1111 de la première pièce.

De même, dans cet exemple de réalisation, le deuxième membre 1320 est un bras rectiligne d'épaisseur constante, et de même épaisseur que celle du bras formant le premier membre 1310, qui s'étend depuis une face latérale 1212 de la deuxième pièce dans un prolongement de la première face 1211 de la deuxième pièce
En d'autres termes, la première pièce 1100 comporte un premier bras 1310 qui s'étend depuis une face latérale 1112 et la deuxième pièce 1200 comporte un deuxième bras 1320 qui s'étend depuis une face latérale 1212 ; le premier bras et le deuxième bras sont reliés par une liaison pivot 1330 formant ainsi une charnière.

La liaison pivot 1330, quant à elle, est ici formée par un voile 1331.

De préférence, comme c'est le cas ici, une jonction 1332 entre le voile 1331 et le premier membre 1310 est située dans un prolongement de la première face 1111 de la première pièce 1100 et une jonction 1333 entre le voile 1331 et le deuxième membre 1320 est située dans un prolongement de la première face 1211 de la deuxième pièce 1200.

Un ensemble de guidage et fixation tel que représenté ici est ainsi très facilement fabriqué, notamment par extrusion.

Par exemple, le voile et au moins une partie de la première pièce et de la deuxième pièce, par exemple au moins le premier bras et le deuxième bras, sont extrudés ensemble par injection.

Voire, l'ensemble du voile, de la première pièce et de la deuxième pièce est extrudé par injection d'un seul tenant.

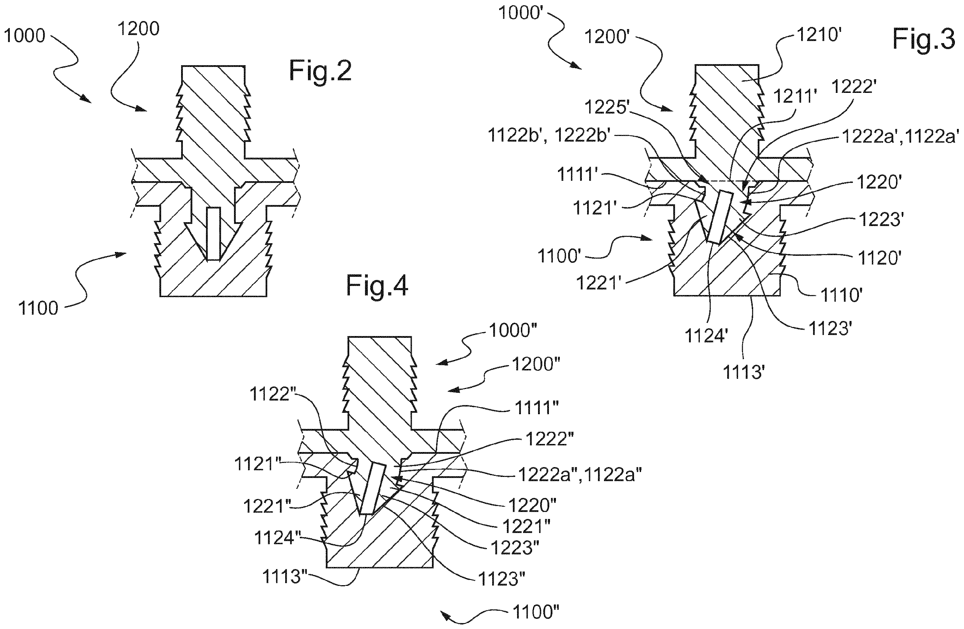

La figure 2 présente désormais l'ensemble de guidage et fixation précédemment décrit en position verrouillée.

C'est-à-dire que le système de fixation 1000 est fermé, la deuxième pièce 1200 est emboîtée dans la première pièce 1100.

Il est ainsi facile de constater que la forme du premier harpon 1220 coïncide au mieux avec celle du logement 1120 de sorte à minimiser voire éviter tout jeu de montage.

En refermant le système de fixation 1000, le premier harpon 1220 parcourt ainsi virtuellement un arc de cercle en direction du logement 1120, un centre du cercle étant alors matérialisé par la liaison pivot 1330 de la charnière 1300.

La figure 3 présente une première variante de réalisation selon l'invention de l'exemple de système de fixation 1000 représenté figure 1.

Les éléments analogues portent donc des références numériques identiques surmontées d'un signe « prime » et seules les principales références numériques concernées sont rappelées par souci d'allègement de la figure.

Cette réalisation diffère de l'exemple représenté figure 1 seulement en ce que le premier harpon 1220', et par voie de conséquence le logement 1120', est courbé dans le plan de la section représentée.

Le premier harpon 1220' est en saillie depuis la première face 1211' du corps 1210' de la deuxième pièce 1200'.

Le bras 1222', centré sur un socle 1225' isocèle, est courbé de sorte que la paroi latérale 1222b' est désormais plus courte que la paroi latérale 1222a' et de même, la paroi de guidage 1122b' du logement 1120' est désormais plus courte que la paroi de guidage 1122a'.

Il en découle que la tête 1223' est pivotée et il en va de même pour le compartiment d'accueil 1123'.

En particulier, la tête 1223' et le compartiment d'accueil 2123 sont orientés en direction de la charnière (non représentée).

En refermant le système de fixation 1000', le premier harpon 1220' parcourt virtuellement un arc de cercle en direction du fond 1124' du logement, un centre du cercle étant alors matérialisé par la liaison pivot de la charnière.

On considère en outre ici que les deux ailes 1221' ont conservé les mêmes longueurs. Par conséquent, le fond 1124' est désormais incliné par rapport à la première face 1111' et au fond 1113' du corps 1110 mais demeure parallèle au plan comportant l'interface entre la partie de guidage 1122' et le compartiment d'accueil 1123' où est formée la butée 1121'.

Un tel exemple de réalisation permet ainsi de faciliter une insertion du premier harpon dans le logement.

La figure 4 présente une deuxième variante de réalisation de l'exemple de système de fixation 1000 représenté figure 1.

Les éléments analogues portent donc des références numériques identiques surmontées d'un signe « seconde » et seules les principales références numériques concernées sont rappelées par souci d'allègement de la figure.

Cette deuxième variante diffère de la précédente représentée figure 3 seulement en ce que, malgré un pivotement de la tête 1223" et du compartiment d'accueil 1123", le fond 1124" est parallèle à la première face 1111" et au fond 1113" du corps 1110 mais est désormais incliné par rapport au plan comportant l'interface entre la partie de guidage 1122" et le compartiment d'accueil 1123" où est formée la butée 1121".

Il en découle qu'une des deux ailes 1221" située d'un côté de la paroi latérale 1222a" est plus courte que l'autre.

Un tel exemple de réalisation permet ainsi de faciliter également une insertion du premier harpon dans le logement.

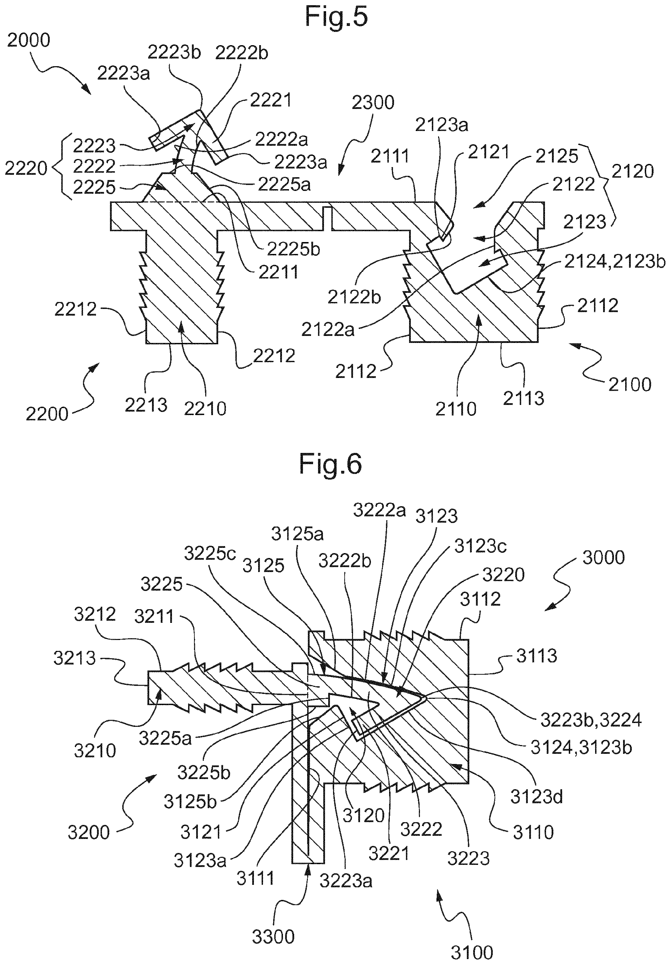

La figure 5 présente un deuxième exemple de réalisation d'un ensemble de guidage et fixation comportant un système de fixation 2000 selon l'invention.

Les éléments analogues avec le mode de réalisation des figures précédentes portent donc des références numériques analogues avec le préfixe 2.

Ce mode de réalisation diffère du précédent de par la forme du premier harpon 2220 et la forme du logement 2120 correspondant.

La première pièce 2100 comporte principalement un corps 2110.

Ici, le corps 2110 comporte une première face 2111 destinée à être en vis-à-vis de la deuxième pièce, deux faces latérales 2112 et un fond 2113 opposé à la première face 2111.

Le corps a une section globalement rectangulaire ce qui permet une réalisation particulièrement simple et un ancrage satisfaisant dans un premier panneau.

Ainsi, la première face 2111 est donc ici considérée parallèle au fond 2113 et les deux faces latérales 2112 sont donc ici considérées parallèles l'une à l'autre et orthogonales à la première face 2111 et au fond 2113.

La première pièce 2100 comporte un logement 2120 de réception d'un premier harpon 2220 de la deuxième pièce 2200.

Le logement 2120 est creusé dans le corps 2110 depuis la première face 2111 de la première pièce 2100.

Le logement 2120 comporte également trois parties : une partie évasée 2125, une partie de guidage 2122 et un compartiment d'accueil 2123. Ces trois parties s'étendent dans l'ordre précité depuis une première face 2111 vers un fond 2124 du logement 2120.

Il comporte principalement une butée 2121 qui est une butée configurée pour retenir le premier harpon 2220 et en empêcher toute extraction une fois que celui-ci a été inséré dans le logement 2120.

Pour cela, la butée 2121 est ici formée par une nervure à une interface entre la partie de guidage 2122 et le compartiment d'accueil 2123 configuré pour recevoir une tête 2223 du premier harpon 2220. A cette interface, une section (orthogonale à une courbe médiane du logement) de la partie de guidage 2122 est plus petite qu'une section (orthogonale à une courbe médiane du logement) du compartiment d'accueil 2123.

Dans cet exemple de réalisation, la partie de guidage 2122 est considérée comme oblique et de section évasée selon une profondeur du logement, c'est-à-dire selon une direction partant de la première face 2111 vers un fond 2124 du logement, formé au fond du compartiment d'accueil 2123.

La partie de guidage 2122 comporte deux parois de guidage 2122a et 2122b qui sont ici planes et divergente l'une par rapport à l'autre en partant de la première face 2111.

En outre, la paroi de guidage 2122b est ici plus courte que la partie de guidage 2122a orientant ainsi le compartiment d'accueil 2123 en direction de la charnière 2300.

Le compartiment d'accueil 2123 a ici une section de forme triangulaire, voire de flèche, comportant une base 2123a, qui comporte la butée 2121, et une pointe 2123b, qui forme le fond 2124 du logement.

Le logement 2120 comporte en outre ici la partie évasée 2125 qui s'étend entre la partie de guidage 2122 et la première face 2111.

Autrement dit, la partie de guidage 2122 se situe donc entre la partie évasée 2125 et le compartiment d'accueil 2123.

La partie évasée 2125 s'élargie depuis la partie de guidage 2122 vers la première face 2111.

La partie évasée 2125 sert ainsi non seulement à amorcer un guidage de la tête 2223 du premier harpon 2220 vers la partie de guidage 2122 mais également à positionner précisément la deuxième pièce 2200 par rapport à la première pièce 2100 une fois qu'elles sont emboîtées grâce à une forme complémentaire 2225 de la deuxième pièce 2200 qui est décrite ultérieurement.

Le système de retenue de la première pièce 2100 à un premier panneau étant le même que celui des figures précédentes, il n'est pas décrit de nouveau ici.

La deuxième pièce 2200, quant à elle, comporte principalement un corps 2210.

Ici, le corps 2210 comporte une première face 2211 destinée à être en vis-à-vis de la première pièce 2100, deux faces latérales 2212 et un fond 2213 opposé à la première face 2211.

La première face 2211 est également considérée parallèle au fond 2213 et les deux faces latérales 2212 sont ici considérées parallèles l'une à l'autre et orthogonales à la première face 2211 et au fond 2213.

La deuxième pièce 2200 comporte le premier harpon 2220, configuré pour s'insérer et s'emboîter dans le logement 2120 de la première pièce 2100.

Le harpon 2220 est en saillie depuis la première face 2211 du corps 2210 de la deuxième pièce 2200.

Ici, le premier harpon 2220 présente en particulier une forme de contour complémentaire du logement 2120.

Dans cet exemple de réalisation, le premier harpon 2220 est considéré comme courbé, comme le logement 2120.

Le premier harpon 2220 comporte principalement la tête 2223 précitée, un bras 2222 soutenant la tête 2223 et un socle évasé 2225 qui s'étend entre le bras 2222 et la première face 2211. Autrement dit, le bras 2222 se situe donc entre le socle évasé 2225 et la tête 2223.

Le socle évasé 2225 s'élargie depuis le bras 2222 vers la première face 2211.

En particulier ici, le socle évasé 2225 présente une section qui est un quadrilatère, en particulier un trapèze isocèle.

Le trapèze isocèle comporte ainsi une grande base formée par une partie de la première face 2211, une petite base, parallèle à la grande base, formée par une surface plane 2225a depuis laquelle s'étend le bras 2222 et deux pans inclinés 2225b reliant la grande base à la petite base de chaque côté.

Le socle évasé 2225 forme ainsi la forme complémentaire précitée qui sert à positionner précisément la deuxième pièce 2200 par rapport à la première pièce 2100 une fois qu'elles sont emboîtées, le socle évasé 2225 coïncidant avec la partie évasée 2125 de la première pièce 2100 décrite précédemment.

Le bras 2222 s'étend depuis le socle évasé 2225 en étant ici décentré, en particulier décalé vers la charnière 2300 par rapport à un milieu de la surface plan 2225a.

Le bras 2222 comporte deux parois latérales 2222a et 2222b qui sont ici courbes et parallèles l'une à l'autre. En outre, la paroi latérale 2222a est plus longue que la paroi latérale 2222b de sorte que le premier harpon est ici courbé en direction de la charnière 2300.

La tête 2223 a ici une forme de flèche comportant deux ailes 2221 s'étendant depuis un sommet du bras formant une pointe 2223b de la flèche soit également une extrémité apicale 2224 du premier harpon 2220. Chaque aile 2221 a ainsi deux extrémités : l'une formant la pointe 2223b et l'autre étant une extrémité libre 2223a. De plus, ici, les deux ailes présentent une même longueur, c'est-à-dire une même distance entre leurs deux extrémités précitées.

Chaque aile comporte donc au moins une partie détachée du bras de sorte à avoir une flexibilité structurelle élastique.

Une distance entre les extrémités libres 2223a de chacune des ailes 2221 est en outre supérieure à une largeur du bras 2222 dans un même plan.

Ainsi, lors du passage de la tête 2223 dans la partie de guidage 2122, les ailes sont rabattues vers le bras et une fois que les extrémités libres 2223a sont sorties dans le compartiment d'accueil 2123 au-delà des butées 2121, les ailes de déploient et viennent ici se plaquer contre des parois du compartiment d'accueil 2123. Chaque extrémité libre 2223a est retenue ici dans le compartiment d'accueil par les butées 2121 du logement 2220 pour empêcher toute extraction du premier harpon 2220 une fois que celui-ci a été inséré dans le logement 2120. Les extrémités libres 2223a sont ici retenues de glisser de retour vers la partie de guidage 2122 grâce aux butées 2121.

En effet, ici, une fois le système de fixation 2000 refermé, chaque extrémité libre 2223a est bloquée dans une partie du logement avec la nervure formant la butée 2121 empêchant tout rabattage d'une aile contre le bras 2222.

Le système de retenue de la deuxième pièce 2200 à un deuxième panneau étant le même que celui des figures précédentes, il n'est pas décrit de nouveau ici.

La figure 6 présente un troisième exemple de réalisation d'un ensemble de guidage et fixation comportant un système de fixation 3000 selon l'invention.

Les éléments analogues avec le mode de réalisation des figures précédentes portent donc des références numériques analogues avec le préfixe 3.

Ce mode de réalisation diffère du précédent de par la forme du premier harpon 3220 et la forme du logement 3120 correspondant.

De même que précédemment, la première pièce 3100 comporte principalement un corps 3110.

Ici, le corps 3110 comporte une première face 3111 destinée à être en vis-à-vis de la deuxième pièce, deux faces latérales 3112 et un fond 3113 opposé à la première face 3111.

La première pièce 3100 comporte un logement 3120 de réception d'un premier harpon 3220 de la deuxième pièce 3200 qui est creusé dans le corps 3110 depuis la première face 3111 de la première pièce 3100.

Le logement 3120 comporte ici deux parties : une partie évasée 3125 et un compartiment d'accueil 3123. Il est ainsi dépourvu de partie de guidage à proprement parlé ; le guidage est ici assuré par la partie évasée et une partie du compartiment d'accueil.

Ces parties s'étendent dans l'ordre précité depuis une première face 3111 vers un fond 3124 du logement 3120.

La partie évasée 3125 s'étend donc ici entre le compartiment d'accueil 3123 et la première face 2111.

La partie évasée 3125 s'élargie depuis le compartiment d'accueil 3125 vers la première face 3111. Elle comporte un côté 3125a et un côté opposé 3125b qui est plus court que le côté 3125a et situé entre le côté 3125a et la charnière 3300.

La partie évasée 3125 sert ainsi non seulement à amorcer un guidage de la tête 3223 du premier harpon 3220 vers le compartiment d'accueil 3123 mais également à positionner précisément la deuxième pièce 3200 par rapport à la première pièce 3100 une fois qu'elles sont emboîtées.

Dans cet exemple de réalisation, le compartiment d'accueil 3123 a ici une section de forme triangulaire comportant une base 3123a et un sommet 3123b, qui forme le fond 3124 du logement. Il comporte en outre deux côtés 3123c et 3123d, le côté 3123c relie ici directement le côté 3125a de la partie évasée 3125 au sommet 3123b et le côté 3123d relie ici la base 3123a au sommet 3123b. Par ailleurs, la base 3123a est ici directement reliée à un côté opposé 3125b de la partie évasée 3125.

On note en outre que le côté 3123c est ici légèrement bombé vers un extérieur du logement.

Il comporte en outre une butée 3121 qui est une butée configurée pour retenir le premier harpon 3220 et en empêcher toute extraction une fois que celui-ci a été inséré dans le logement 3120.

Pour cela, la butée 3121 est ici formée par un rétrécissement de section à une interface entre la partie évasée 3125 et le compartiment d'accueil 3123 configuré pour recevoir la tête 3223 du premier harpon 3220.

Et en particulier ici, la butée 3121 est formée par la base 3123a du compartiment d'accueil 3123.

Le système de retenue de la première pièce 3100 à un premier panneau étant le même que celui des figures précédentes, il n'est pas décrit de nouveau ici.

La deuxième pièce 3200, de même que précédemment, comporte principalement un corps 3210. Ici, le corps 3210 comporte une première face 3211 destinée à être en vis-à-vis de la première pièce 3100, deux faces latérales 3212 et un fond 3213 opposé à la première face 3211.

La deuxième pièce 3200 comporte le premier harpon 3220, configuré pour s'insérer et s'emboîter dans le logement 3120 de la première pièce 3100.

Le harpon 3220 est en saillie depuis la première face 3211 du corps 3210 de la deuxième pièce 3200.

Ici, le premier harpon 3220 présente en particulier une forme de contour qui n'est pas complémentaire du logement 3120.

Toutefois, dans cet exemple de réalisation, le premier harpon 3220 est considéré comme faiblement courbé.

Le premier harpon 3220 comporte principalement la tête 3223 précitée, un bras 3222 soutenant la tête 3223 et un socle 3225 qui s'étend entre le bras 3222 et la première face 3211. Autrement dit, le bras 3222 se situe donc entre le socle 3225 et la tête 3223.

Le socle 3225 présente ici une section qui est un quadrilatère. Il comporte en particulier une base inférieure formée par une partie de la première face 3211, une base supérieure, ici parallèle à la base inférieure, formée par une surface plane 3225a depuis laquelle s'étend le bras 3222 et deux pans latéraux 3225b et 3225c reliant la base inférieure à la base supérieure de chaque côté, le pan latéral 3225b étant situé entre la charnière 3300 et le pan latéral 3225c. On note en particulier que le pan latéral 3225c est bombé vers un extérieur du socle.

Le bras 3222 s'étend depuis le socle évasé 3225.

Le bras 3222 comporte deux parois latérales 3222a et 3222b qui sont ici courbes et parallèles l'une à l'autre. En outre, la paroi latérale 3222a est plus longue que la paroi latérale 3222b de sorte que le premier harpon est ici courbé en direction de la charnière 3300. De plus, la paroi latérale 3222a forme ici une continuité de surface avec le pan latéral 3225c. Ainsi, ici le bras est décentré par rapport au socle et dans une position écartée de la charnière par rapport à une position centrée sur le socle. De plus, la paroi latérale 3222a forme également une continuité de courbure avec le pan latéral 3225c.

Par ailleurs, la tête 3223 a ici une forme de flèche comportant une seule aile 3221 s'étendant depuis un sommet du bras formant une pointe 3223b de la flèche soit également une extrémité apicale 3224 du premier harpon 3220. Cette aile s'étant ici du côté de la paroi latérale 3222b du bras 3222. L'aile 3221 a ainsi deux extrémités : l'une formant la pointe 3223b et l'autre étant une extrémité libre 3223a. L'aile comporte donc au moins une partie détachée du bras de sorte à avoir une flexibilité structurelle élastique.

Une distance entre l'extrémité libre 3223a et le bras est donc supérieure à une largeur du bras 3222 dans un même plan.

Ainsi, lors d'une insertion de la tête 3223 dans le compartiment d'accueil, l'aile est rabattue vers la paroi latérale 3222b du bras 3222 lors de son passage à l'interface entre le compartiment d'accueil et la partie évasée et une fois que l'extrémité libre 3223a est sortie dans le compartiment d'accueil 3123 au-delà de la base 3123a, l'aile de déploie et vient ici se plaquer contre le côté 3123d du compartiment d'accueil 2123 qui relie la base 3123a au sommet 3123b. L'extrémité libre 3223a est ensuite retenue dans le compartiment d'accueil par la butée 3121 du logement 3220, soit ici par la base, pour empêcher toute extraction du premier harpon 3220 une fois que celui-ci a été inséré dans le logement 3120.

Une fois insérée, la paroi latérale 3222a du bras est plaquée contre le côté 3123c du compartiment d'accueil et un coin formé entre la surface plane 3225a et le pan latéral 3225b est en appui contre le côté opposé 3125b de la partie évasée 3125 du logement.

Tout jeu de montage est ainsi minimisé.

Le système de retenue de la deuxième pièce 3200 à un deuxième panneau étant le même que celui des figures précédentes, il n'est pas décrit de nouveau ici.

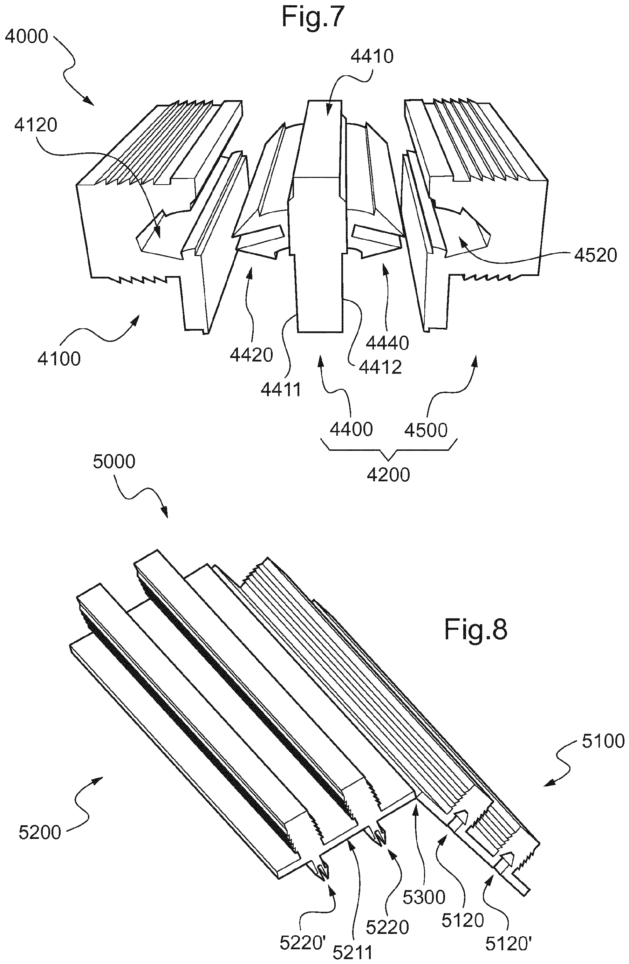

La figure 7 présente un quatrième exemple de réalisation d'un ensemble de guidage et fixation comportant un système de fixation 4000 selon l'invention.

Les éléments analogues avec le mode de réalisation des figures précédentes portent donc des références numériques analogues avec le préfixe 4.

Dans ce mode de réalisation, on considère que la deuxième pièce 4200 comporte une première partie 4400 et une deuxième partie 4500.

La première partie 4400 comporte ici un corps 4410, une âme centrale massive, qui comporte deux faces opposées : une première face 4411 et une deuxième face 4412.

En particulier ici, la première face 4411 et la deuxième face 4412 sont planes et parallèles l'une à l'autre.

La première partie 4400 comporte un premier harpon 4420, lequel est configuré pour s'emboîter dans un logement de réception 4120 d'une première pièce, et un deuxième harpon 4440, lequel est configuré pour s'emboîter dans un logement de réception 4520 de la deuxième partie 4500.

Le premier harpon 4420 s'étend depuis la première face 4411, de la même manière que dans les exemples précédemment décrits, et de manière analogue le deuxième harpon 4440 s'étend depuis la deuxième face 4412, de la même manière que le premier harpon 4440 s'étend depuis la première face 4411.

Ici, le premier harpon 4420 et le deuxième harpon 4440 de la première partie 4400 de la deuxième pièce 4200 font saillie du corps 4410 en étant dos à dos.

De plus ici, le premier harpon 4420 et le deuxième harpon 4440 sont identiques.

Ainsi, dans cet exemple de réalisation, un plan médian du corps 4410 forme donc un plan de symétrie de la première partie 4400 de la deuxième pièce 4200.

De plus, ici, la deuxième partie 4500, qui comporte le logement 4520 de réception du deuxième harpon 4440 de la première partie 4400 et un système de retenue de la deuxième pièce 4200 à un deuxième panneau, est identique à la première pièce 4100 et est formée en miroir par rapport à celle-ci.

Ainsi, dans cet exemple de réalisation, le plan médian précité forme donc également un plan de symétrie du système de fixation 4000 lorsque le premier harpon 4420 est emboîté dans le logement de la première pièce 4100 et le deuxième harpon 4440 est emboîté dans le logement 4520 de la deuxième partie 4500 de la deuxième pièce 4200.

Bien entendu, pour un tel mode de réalisation, la première pièce 4100 peut être conforme à l'un quelconque des modes de réalisation de la présente invention.

Parallèlement, la deuxième partie 4500 de la deuxième pièce 4200 peut être conforme à l'un quelconque des modes de réalisation de la présente invention.

Et dans un mode de réalisation particulier, la deuxième partie 4500 de la deuxième pièce 4200 peut être identique, symétrique, à la première pièce.

Et bien entendu, pour un tel mode de réalisation, le premier harpon 4420 peut être conforme à l'un quelconque des modes de réalisation de la présente invention en concordance avec un logement correspondant.

Parallèlement, le deuxième harpon, 4440 peut être conforme à l'un quelconque des modes de réalisation de la présente invention en concordance avec un logement correspondant.

Ainsi, dans un mode de réalisation particulier, le premier harpon 4420 et le deuxième harpon 4440 sont identiques, symétrique l'un par rapport à l'autre.

Autrement dit, la première partie 4400 de la deuxième pièce 4200 comporte alors possiblement un plan de symétrie.

Par ailleurs, selon un mode de réalisation et de manière optionnelle, la première pièce 4100 et la première partie 4400 de la deuxième pièce 4200 sont reliées l'une à l'autre par une charnière, par exemple une charnière telle que décrite précédemment.

Et/ou, selon un mode de réalisation et de manière optionnelle, la première partie 4400 de la deuxième pièce 4200 et la deuxième partie 4500 de la deuxième pièce 4200 sont reliées l'une à l'autre par une charnière, par exemple une charnière telle que décrite précédemment.

Ici, le mode de réalisation représenté peut être considéré comme une variante du mode de réalisation de la figure 3, lequel correspond principalement au mode de réalisation de la figure 1 avec le bras du premier harpon qui est courbé et par voie de conséquence, la partie de guidage du logement qui est courbée de la même manière.

La première pièce 4100 est donc ici majoritairement identique à la première pièce 1100' représentée en section sur la figure 3. Elle n'est donc pas décrite de nouveau ici.

Le premier harpon 4420 est majoritairement identique au premier harpon 1220' représenté figure 3. Il n'est donc pas non plus décrit de nouveau en détails ici.

Le deuxième harpon 4440 est majoritairement identique au premier harpon 1220' représenté figure 3. Il n'est donc pas non plus décrit de nouveau en détails ici.

La deuxième partie, qui 4500 comporte le logement 4520 de réception du deuxième harpon 4440 de la première partie 4400 et un système de retenue de la deuxième pièce 4200 à un deuxième panneau, est ici identique et symétrique à la première pièce 4100. Elle n'est donc pas non plus décrite de nouveau en détails ici.

La figure 8 présente un cinquième exemple de réalisation d'un ensemble de guidage et fixation comportant un système de fixation 5000 qui ne fait pas partie de l'invention.

Les éléments analogues avec le mode de réalisation des figures précédentes portent donc des références numériques analogues avec le préfixe 5.

Cet exemple de réalisation est dit « système de fixation double ». Il se distingue des précédents de par le fait que la première pièce 5100 comporte deux logements 5120 et 5120' de réception d'un harpon et en ce que la deuxième pièce 5200 comporte deux harpons 5220 et 5220' s'étendant depuis une même première face 5211 de la deuxième pièce 5200.

Par exemple, la première pièce 5100 comporte deux premières pièces selon l'un quelconque des modes de réalisation décrits précédemment juxtaposées et la deuxième pièce 5200 comporte deux deuxièmes pièces selon l'un quelconque des modes de réalisation décrits précédemment dont le harpon correspond au logement auquel il est destiné.

Bien entendu, pour un tel exemple de réalisation, chaque logement peut être conforme à l'un quelconque des modes de réalisation de la présente invention précédemment décrits.

Et dans un exemple de réalisation particulier, les deux logements peuvent être identiques, parallèles l'un à l'autre.

Et bien entendu, pour un tel exemple de réalisation, chaque harpon peut être conforme à l'un quelconque des modes de réalisation de la présente invention précédemment décrits, en concordance avec un logement correspondant.

Ainsi, dans un exemple de réalisation particulier, les deux harpons sont identiques, parallèles l'un à l'autre.

Par ailleurs, selon un exemple de réalisation et de manière optionnelle, la première pièce 5100 et la deuxième pièce 5200 sont reliées l'une à l'autre par une charnière 5300, par exemple une charnière telle que décrite précédemment.

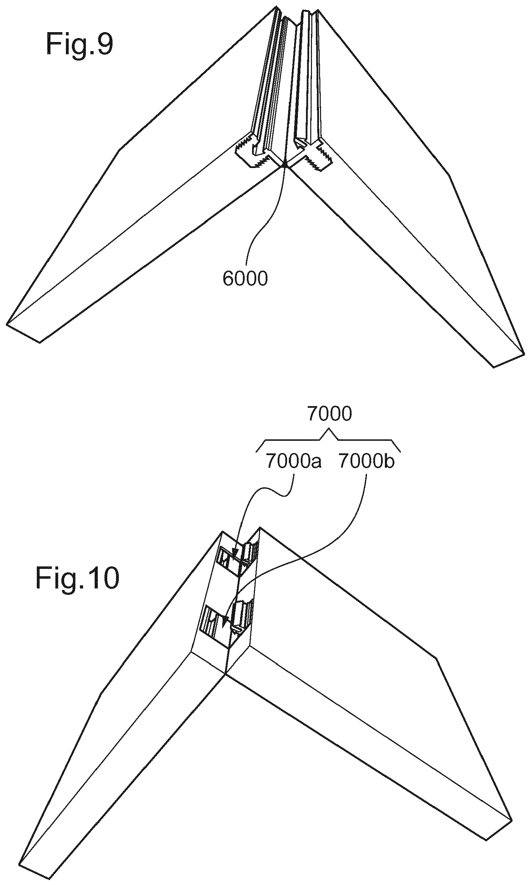

Les figures 9 et 10 illustrent une jonction entre deux parois grâce à un ensemble de guidage et fixation selon l'un quelconque des modes de réalisation décrits précédemment.

Un ensemble de guidage et fixation selon l'invention est ainsi facilement réalisé par extrusion.

Selon la figure 9, un système de fixation 6000 d'un ensemble de guidage et fixation s'étend ainsi tout le long d'une tranche de chacune des deux parois qu'il relie.

De préférence, un espace est laissé entre une extrémité du système de fixation 6000 et un bord de la tranche depuis lequel il s'étend pour éviter qu'il soit visible depuis un extérieur de la paroi.

Le système de fixation 6000 peut être conforme à l'un quelconque des modes de réalisation décrits précédemment en lien avec les figures 1 à 8.

Selon la figure 10, le système de fixation 7000 d'un ensemble de guidage et fixation est formé de deux tronçons 7000a, 7000b répartis le long d'une tranche de chacune des deux parois qu'il relie. Mais il pourrait bien entendu être formé de davantage de tronçons, par exemple trois, ou quatre voire cinq ou plus.

Chaque tronçon du système de fixation 7000 peut être conforme à l'un quelconque des modes de réalisation décrits précédemment en lien avec les figures 2 à 7.

Bien entendu, les systèmes de fixation des figures 9 et 10 pourraient également s'étendre le long d'une tranche pour l'une des parois et le long d'une face de l'autre des parois selon les besoins.

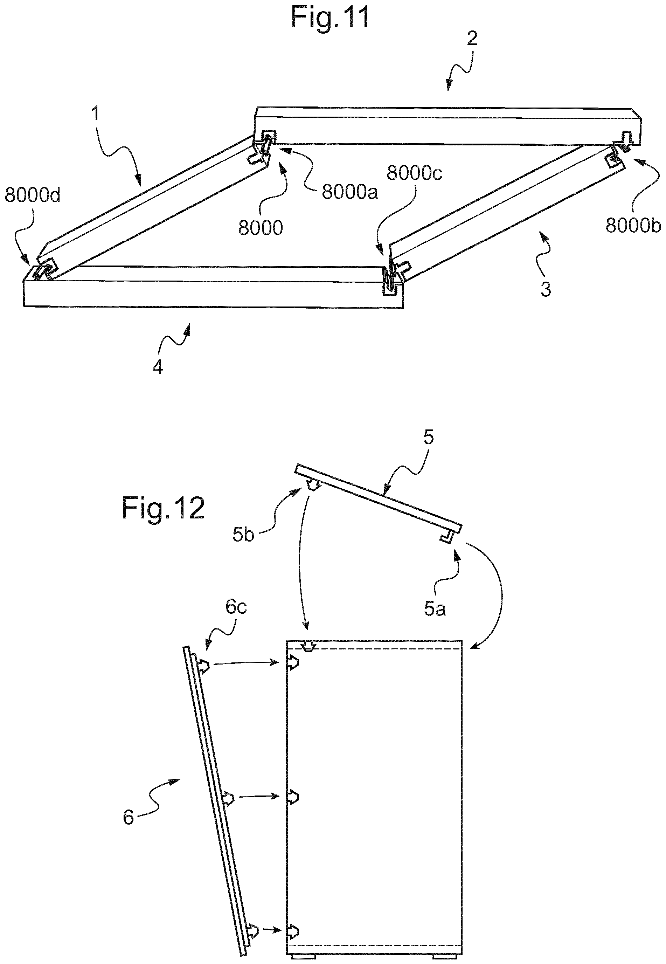

La figure 11 présente un meuble comportant quatre parois 1, 2, 3, 4 dont au moins certaines d'entre elle, et même ici toutes les parois, sont reliées entre elles par un ensemble de guidage et fixation comportant un système de fixation 8000 et une charnière selon un exemple de réalisation de la présente invention.

Le meuble de la figure 11 comporte donc ici quatre ensembles de guidage et fixation comportant un système de fixation 8000 et une charnière reliant une première paroi à une deuxième paroi adjacente à la première paroi ; chaque système de fixation est conforme à l'un quelconque des modes de réalisation décrits précédemment en lien avec les figures 1 à 10.

Et dans un mode de réalisation particulier, tous les systèmes de fixation 8000 d'un même meuble sont identiques.

Un tel meuble peut ainsi être livré plié, à plat, avec une première paroi 1 sensiblement alignée avec une deuxième paroi 2 et une troisième paroi 3 sensiblement alignée avec une quatrième paroi 4 ; et la première paroi 1 et la deuxième paroi 2 disposée parallèlement et contre la troisième paroi 3 et la quatrième paroi 4.

Pour monter un tel meuble, la première paroi 1 et la troisième paroi 3, par exemple, sont redressées d'une position horizontale vers une position verticale.

Pour cela, le système de fixation 8000a reliant la première paroi 1 et la deuxième paroi 2 est positionné avec la charnière orientée vers un extérieur du meuble et le système de fixation 8000c reliant la troisième paroi 3 et la quatrième paroi 4 est positionné avec la charnière orientée vers un extérieur du meuble tandis que le système de fixation 8000b reliant la deuxième paroi 2 et la troisième paroi 3 est positionné avec la charnière orientée vers un intérieur du meuble et le système de fixation 8000d reliant la quatrième paroi 4 et la première paroi 1 est positionné avec la charnière orientée vers un intérieur du meuble.

Une fois les parois redressées, une étape consiste à encliqueter le premier harpon de la deuxième pièce de chacun des systèmes de fixation 8000 du meuble dans le logement de la première pièce correspondant.

Au préalablement, chacune des tranches ou faces destinées à recevoir un système de fixation 8000 selon un exemple de réalisation de la présente invention est munie, sur au moins une partie, d'au moins une rainure, par exemple une rainure pour les modes de réalisation des figures 1 à 7 ou deux rainures parallèles côte à côte pour le mode de réalisation de la figure 8.

La première pièce ou la deuxième pièce, selon la paroi considérée, est attachée à la paroi correspondante. Par exemple, la pièce considérée est enfoncée dans la rainure (ou les rainures).

Par exemple, un corps de la pièce comportant un système de retenue, par exemple un système de retenu tel que décrit précédemment, est enfoncé dans la rainure, par exemple grâce à un marteau ou un maillet.

Il est ainsi possible de se dispenser de tout autre moyen de fixation.

La figure 12 présente enfin un meuble selon un autre exemple de réalisation de la présente invention dans lequel au moins deux parois adjacentes sont possiblement reliées par un ensemble de guidage et fixation selon l'un des modes de réalisation décrits précédemment et dans lequel au moins une troisième paroi est encliquetée à d'autres parois du meuble.

Dans l'exemple de réalisation représenté, une paroi supérieure 5 est par exemple enclenchée à un avant du meuble par un crochet 5a puis encliquetée dans au moins une autre paroi, par exemple grâce à un système d'attache 5b à queue de sapin.

Parallèlement ou indépendamment, une paroi dorsale 6 du meuble est par exemple fixée à au moins une autre paroi par un système d'attache par enclenchement 6c ce qui permet d'assurer un équerrage entre les parois et une stabilité du meuble.

Selon un exemple privilégié, le système d'attache par enclenchement 6c comporte par exemple un élément dit « à double queue de sapin ».

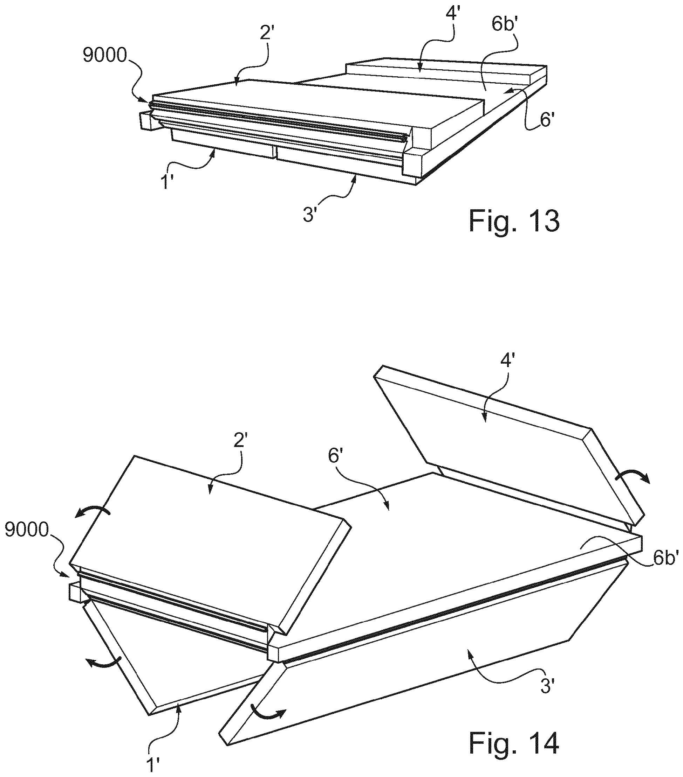

Enfin, les figures 13 à 16 présentent un meuble comportant quatre parois latérales 1', 2', 3', 4' et une paroi dorsale 6', chacune des parois latérales étant reliée à la paroi dorsale un ensemble de guidage et fixation selon un exemple de réalisation de la présente invention.

Le meuble comporte donc quatre ensembles de guidage et fixation reliant chacune des parois latérales à la paroi dorsale qui peuvent être tous identiques, tous différents ou deux ou trois des ensembles peuvent être identiques et différer des autres. Chacun des ensembles de guidage et fixation comporte un système de fixation permanente 9000 et une charnière qui peuvent donc être selon n'importe lequel des modes de réalisation présentés précédemment.

Un tel meuble est par exemple commodément livré à plat, dans une configuration telle que celle représentée figure 13 par exemple.

Dans cette configuration, deux parois opposées 1', 3' parmi les quatre parois latérales sont rabattues sur un recto 6a' de la paroi dorsale 6' tandis que deux autres parois opposées 2', 4', différentes des précédentes, sont rabattues sur un verso 6b' de la paroi dorsale 6'.

On entend ici par « recto » et « verso », deux faces principales opposées dos à dos d'une même paroi.

Grâce à la charnière de chacun des ensembles de guidage et fixation, qui de préférence est formée conjointement au système de fixation permanente 9000 du même ensemble, chaque paroi est pivotée pour être positionnée orthogonalement au recto 6a' de la paroi dorsale 6'.

Dans le présent exemple, les parois 1', 3' initialement rabattues sur le recto 6a' sont d'abord positionnées en étant pivotée d'environ 90° et, grâce au système de fixation permanente respectif, elles sont fixées en position par rapport au recto 6a' de la paroi dorsale 6'.

Ces systèmes de fixation sont alors reliés à une tranche des parois 1' et 3' et au recto 6a' de la paroi dorsale 6'.

Ensuite, les parois 2', 4' initialement rabattues sur le verso 6b' sont positionnées en étant pivotée d'environ 270°. Et de même, grâce au système de fixation permanente 9000 respectif, elles sont fixées en position par rapport au recto 6a' la paroi dorsale 6'.

Ces systèmes de fixation sont alors reliés à une tranche, ici biaisée, des parois 2' et 4' et à une tranche, également biaisée en concordance, de la paroi dorsale 6'.

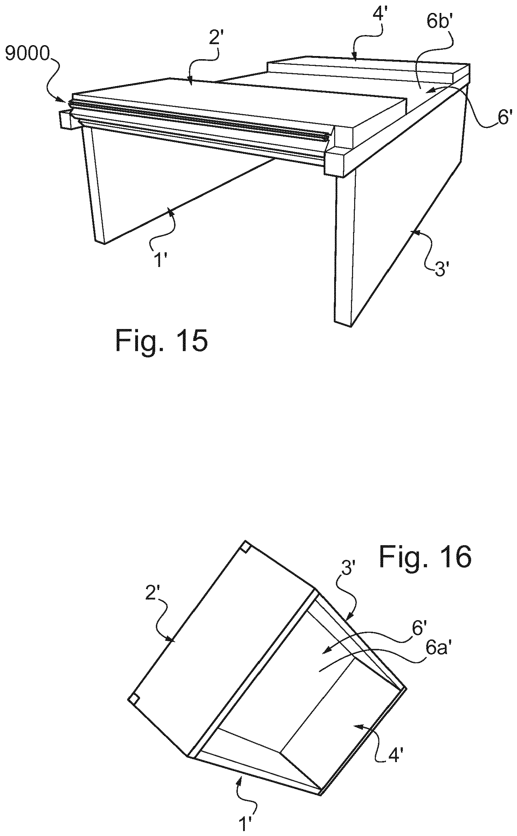

Comme le montre la figure 16, des rebords latéraux des parois 2', 4' mises en position dans une deuxième étape après avoir été pivotées de 270° viennent en appui sur des extrémités des parois 1', 3' mise en position dans une première étape après avoir été pivotées de 90°. Un tel ordre d'étape est particulièrement commode lorsque des parois dont des rebords latéraux viennent en appui sur des extrémités de parois préalablement positionnées sont munies de systèmes d'attache additionnels, comme par exemple des systèmes d'attache par enclenchement.

## Revendications

1. Ensemble de guidage et fixation, comportant un système de fixation permanente (1000) pour meuble et une charnière (1300), le système de fixation permanente (1000) étant configuré pour lier rigidement un premier panneau à un deuxième panneau du meuble dans une position montée, le système de fixation permanente (1000) comportant au moins une première pièce (1100), configurée pour être fixée au premier panneau, et une deuxième pièce (1200), configurée pour être fixée au deuxième panneau et s'emboîter dans la première pièce (1100),
- la première pièce (1100) comportant :
∘ un corps (1110) comportant au moins une première face (1111),
∘ un logement de réception (1120) d'un premier harpon (1220) de la deuxième pièce (1200), le logement (1120) étant creusé depuis la première face du corps de la première pièce et s'étendant dans le corps de la première pièce, le logement (1120) comportant une butée de retenue (1121) du premier harpon, configurée pour retenir le premier harpon de façon permanente après emboîtage, et un compartiment d'accueil (1123) d'une tête (1223) du premier harpon (1220) formé entre un fond (1124) du logement (1120) et la butée (1121), et
∘ un système de retenue (1130) de la première pièce au premier panneau formé sur au moins une face du corps (1110) de la première pièce (1100) distincte de la première face (1111),
- la deuxième pièce (1200) comportant :
∘ un corps (1210) comportant au moins une première face (1211),
∘ au moins le premier harpon (1220) configuré pour s'emboîter dans le logement de réception (1120) de la première pièce, le premier harpon étant en saillie depuis la première face (1211) du corps de la deuxième pièce et comportant au moins une tête (1223) et un bras (1222) relié à la première face (1211) et qui soutient la tête, et la tête comportant au moins une aile (1221) configurée pour être rabattue lors de l'insertion de la tête (1223) dans le logement (1120) et pour se redéployer lorsque la tête (1223) est dans le compartiment d'accueil (1123) du logement,
∘ un système de retenue (1230) de la deuxième pièce au deuxième panneau formé sur au moins une face du corps (1210) de la deuxième pièce (1200) distincte de la première face (1211),
- la charnière (1300) étant configurée pour guider à pivotement une insertion du premier harpon (1220) de la deuxième pièce (1200) dans le logement de réception (1120) correspondant de la première pièce (1100), le premier harpon (1220) et le logement de réception (1120) étant courbés respectivement dans le plan de coupe perpendiculaire à au moins une face du corps (1110) de la première pièce (1100) et à au moins une face du corps (1210) de la deuxième pièce (1200) pour faciliter l'insertion du premier harpon dans le logement.

2. Ensemble selon la revendication 1, **caractérisé en ce que** le système fixation permanente (1000) comporte la charnière (1300), et **en ce que** la charnière (1300), la première pièce (1100) et la deuxième pièce (1200) sont formées d'un seul tenant.

3. Ensemble selon la revendication 2, **caractérisé en ce que** la charnière (1300) comporte un voile (1331) ; le voile (1331) et au moins une partie de la première pièce (1100) et au moins une partie de la deuxième pièce (1200) étant extrudés ensemble par injection.

4. Ensemble selon l'une quelconque des revendications 1 à 3, **caractérisé en ce que** le système de retenue (1130) de la première pièce (1100) au premier panneau comporte une surface (1112) présentant une géométrie de rétention axiale unidirectionnelle.

5. Ensemble selon l'une quelconque des revendications 1 à 4, **caractérisé en ce que** le système de retenue (1230) de la deuxième pièce (1200) au deuxième panneau comporte une surface (1212) présentant une géométrie de rétention axiale unidirectionnelle.

6. Ensemble selon l'une quelconque des revendications 1 à 5, **caractérisé en ce que** la deuxième pièce (4200) comporte une première partie (4400) et une deuxième partie (4500),
- la première partie (4400) comportant :
∘ un corps (4410) présentant une première face (4411) et une deuxième face (4412),
∘ le premier harpon (4420) en saillie depuis la première face (4411) du corps de la première partie,
∘ un deuxième harpon (4440) configuré pour s'emboîter dans un logement de réception (4520) de la deuxième partie (4500), le deuxième harpon (4440) étant en saillie depuis la deuxième face (4412) du corps de la première partie (4400) et comportant au moins une tête et un bras relié à la deuxième face et qui soutient la tête, et la tête comportant au moins une aile configurée pour être rabattue lors de l'insertion de la tête dans le logement de la deuxième partie et pour se redéployer lorsque la tête est dans un compartiment d'accueil du logement (4520) de la deuxième partie (4500) et
- la deuxième partie (4500) comportant :
∘ un corps comportant au moins une première face,
∘ le logement de réception (4520) du deuxième harpon (4440) de la première partie, le logement (4520) étant creusé depuis la première face du corps de la deuxième partie et s'étendant dans le corps de la deuxième partie, le logement (4520) comportant une butée de retenue du deuxième harpon, configurée pour retenir le deuxième harpon (4440) de façon permanente après emboîtage, et le compartiment d'accueil de la tête du deuxième harpon formé entre un fond du logement et la butée, et
∘ le système de retenue de la deuxième pièce au deuxième panneau formé sur au moins une face du corps de la deuxième partie distincte de la première face.

7. Ensemble selon la revendication 6, **caractérisé en ce que** la première face (4411) du corps (4410) de la première partie (4400) est distincte de la deuxième face (4412) du corps (4410) de la première partie (4400), le premier harpon (4420) et le deuxième harpon (4440) de la première partie (4400) de la deuxième pièce (4200) étant dos à dos.

8. Meuble comportant au moins un ensemble selon l'une quelconque des revendications 1 à 7, le meuble comportant une première paroi (1), formant un premier panneau relié à la première pièce du système de fixation permanente (8000), et une deuxième paroi (2), adjacente à la première paroi (1) et formant un deuxième panneau relié à la deuxième pièce du système de fixation permanente (8000), et la première paroi (1) et la deuxième paroi (2) étant reliées par la charnière.

9. Procédé de montage d'un meuble selon la revendication 8 comportant :
- Une étape de redressement par pivotement d'au moins la première paroi (1) par rapport à la deuxième paroi (2) adjacente à la première paroi (1) ; et
- Une étape d'encliquetage du premier harpon de la deuxième pièce du système de fixation permanente (8000) dans le logement de la première pièce du système de fixation permanente (8000).

10. Procédé de montage selon la revendication 9, comportant une étape préalable d'attache d'une pièce parmi la première pièce et la deuxième pièce du système de fixation permanente (8000) à l'une de la première paroi (1) ou de la deuxième paroi (2), l'étape préalable comportant une étape d'enfoncement du système de retenue de la pièce dans une rainure formée dans la paroi (1, 2) correspondante.

## Patentansprüche

1. Führungs- und Befestigungsanordnung, enthaltend ein System zur dauerhaften Befestigung (1000) für Möbelstücke und ein Scharnier (1300), wobei das System zur dauerhaften Befestigung (1000) dazu ausgelegt ist, ein erstes Paneel mit einem zweiten Paneel des Möbelstücks in einer montierten Stellung starr zu verbinden, wobei das System zur dauerhaften Befestigung (1000) zumindest ein erstes Teil (1100) enthält, das dazu ausgelegt ist, an das erste Paneel befestigt zu werden, sowie ein zweites Teil (1200), das dazu ausgelegt ist, an das zweite Paneel befestigt zu werden und in das erste Teil (1100) einzurasten,
- wobei das erste Teil (1100) enthält:
∘ einen Körper (1110), der zumindest eine erste Seite (1111) aufweist,
∘ eine Aufnahmeausnehmung (1120) zum Aufnehmen eines ersten Hakens (1220) des zweiten Teils (1200), wobei die Aufnahmeausnehmung (1120) von der ersten Seite des Körpers des ersten Teils her ausgehöhlt ist und sich in dem Körper des ersten Teils erstreckt, wobei die Aufnahmeausnehmung (1120) einen Halteanschlag (1121) für den ersten Haken enthält, der dazu ausgelegt ist, den ersten Haken nach Einrasten dauerhaft zu halten, sowie ein Aufnahmefach (1123) zum Aufnehmen eines Kopfes (1223) des ersten Hakens (1220), das zwischen einem Boden (1124) der Aufnahmeausnehmung (1120) und dem Anaschlag (1121) ausgebildet ist, und
∘ ein Haltesystem (1130) zum Halten des ersten Teils am ersten Paneel, das an zumindest einer Seite des Körpers (1110) des ersten Teils (1100) ausgebildet ist, die sich von der ersten Seite (1111) unterscheidet,
- wobei das zweite Teil (1200) enthält:
∘ einen Körper (1210), der zumindest eine erste Seite (1211) aufweist,
∘ wobei der erste Haken (1220) dazu ausgelegt ist, in die Aufnahmeausnehmung (1120) des ersten Teils einzurasten, wobei der erste Haken von der ersten Seite (1211) des Körpers des zweiten Teils ausgehend vorspringt und zumindest einen Kopf (1223) und einen Arm (1222) aufweist, der mit der ersten Seite (1211) verbunden ist und den Kopf abstützt, und wobei der Kopf zumindest eine Rippe (1221) aufweist, die dazu ausgelegt ist, beim Einführen des Kopfes (1223) in die Aufnahmeausnehmung (1120) umgelegt zu werden und sich wieder aufzustellen, wenn der Kopf (1223) sich in dem Aufnahmefach (1123) der Aufnahmeausnehmung befindet,
∘ ein Haltesystem (1230) zum Halten des zweiten Teils am zweiten Paneel, das an zumindest einer Seite des Körpers (1210) des zweiten Teils (1200) ausgebildet ist, die sich von der ersten Seite (1211) unterscheidet,
- wobei das Scharnier (1300) dazu ausgelegt ist, ein Einführen des ersten Hakens (1220) des zweiten Teils (1200) in die entsprechende Aufnahmeausnehmung (1120) des ersten Teils (1100) schwenkbeweglich zu führen, wobei der erste Haken (1220) und die Aufnahmeausnehmung (1120) jeweils in der Schnittebene senkrecht zu zumindest einer Seite des Körpers (1110) des ersten Teils (1100) bzw. zu zumindest einer Seite des Körpers (1210) des zweiten Teils (1200) gekrümmt verlaufen, um das Einführen des ersten Hakens in die Aufnahmeausnehmung zu erleichtern.

2. Anordnung nach Anspruch 1, **dadurch gekennzeichnet, dass** das System zur dauerhaften Befestigung (1000) das Scharnier (1300) enthält und dass das Scharnier (1300), das erste Teil (1100) und das zweite Teil (1200) einstückig ausgebildet sind.

3. Anordnung nach Anspruch 2, **dadurch gekennzeichnet, dass** das Scharnier (1300) eine Abdeckung (1331) enthält, wobei die Abdeckung (1331) und zumindest ein Abschnitt des ersten Teils (1100) und zumindest ein Abschnitt des zweiten Teils (1200) zusammen durch Spritzen extrudiert sind.

4. Anordnung nach einem der Ansprüche 1 bis 3, **dadurch gekennzeichnet, dass** das Haltesystem (1130) zum Halten des ersten Teils (1100) an dem ersten Paneel eine Fläche (1112) enthält, die eine axiale, unidirektionale Rückhaltegeometrie aufweist.

5. Anordnung nach einem der Ansprüche 1 bis 4, **dadurch gekennzeichnet, dass** das Haltesystem (1230) zum Halten des zweiten Teils (1200) an dem zweiten Paneel eine Fläche (1212) enthält, die eine axiale, unidirektionale Rückhaltegeometrie aufweist.

6. Anordnung nach einem der Ansprüche 1 bis 5, **dadurch gekennzeichnet, dass**
das zweite Teil (4200) einen ersten Abschnitt (4400) und einen zweiten Abschnitt (4500) enthält,
- wobei der erste Abschnitt (4400) enthält:
∘ einen Körper (4410), der zumindest eine erste Seite (4411) und eine zweite Seite (4412) aufweist,
∘ den ersten Haken (4420), der von der ersten Seite (4411) des Körpers des ersten Abschnitts vorspringt,
∘ einen zweiten Haken (4440), der dazu ausgelegt ist, in eine Aufnahmeausnehmung (4520) eines zweiten Abschnitts (4500) einzurasten, wobei der zweite Haken (4440) von der zweiten Seite (4412) des Körpers des erstens Abschnitts (4400) vorspringt und zumindest einen Kopf und einen Arm enthält, der mit der zweiten Seite verbunden ist und den Kopf abstützt, wobei der Kopf zumindest eine Rippe enthält, die dazu ausgelegt ist, beim Einführen des Kopfes in die Aufnahmeausnehmung des zweiten Abschnitts umgelegt zu werden und sich wieder aufzustellen, wenn der Kopf sich in einem Aufnahmefach (4520) der Aufnahmeausnehmung (4520) des zweiten Abschnitts (4500) befindet, und
- wobei der zweite Abschnitt (4500) enthält:
∘ einen Körper, der zumindest eine erste Seite aufweist,
∘ die Aufnahmeausnehmung (4520) zum Aufnehmen des zweiten Hakens (4440) des ersten Abschnitts, wobei die Aufnahmeausnehmung (4520) von der ersten Seite des Körpers des zweiten Abschnitts her ausgehöhlt ist und sich in dem Körper des zweiten Abschnitts erstreckt, wobei die Aufnahmeausnehmung (4520) einen Halteanschlag für den zweiten Haken enthält, der dazu ausgelegt ist, den zweiten Haken (4440) nach Einrasten dauerhaft zu halten, sowie das Aufnahmefach zum Aufnehmen des Kopfes des zweiten Hakens, das zwischen einem Boden der Aufnahmeausnehmung und dem Anschlag ausgebildet ist, und
∘ das Haltesystem zum Halten des zweiten Teils am zweiten Paneel, das an zumindest einer Seite des Körpers des zweiten Abschnitts ausgebildet ist, die sich von der ersten Seite unterscheidet.

7. Anordnung nach Anspruch 6, **dadurch gekennzeichnet, dass** die erste Seite (4411) des Körpers (4410) des ersten Abschnitts (4400) sich von der zweiten Seite (4412) des Körpers (4410) des ersten Abschnitts (4400) unterscheidet, wobei der erste Haken (4420) und der zweite Haken (4440) des ersten Abschnitts (4400) des zweiten Teils (4200) Rücken an Rücken liegen.

8. Möbelstück mit zumindest einer Anordnung nach einem der Ansprüche 1 bis 7, wobei das Möbelstück eine erste Wand (1) enthält, die ein erstes Paneel bildet, das mit dem ersten Teil des Systems zur dauerhaften Befestigung (8000) verbunden ist, sowie eine zweite Wand (2), die an die erste Wand (1) angrenzt und ein zweites Paneel bildet, das mit dem zweiten Teil des Systems zur dauerhaften Befestigung (8000) verbunden ist, wobei die erste Wand (1) und die zweite Wand (2) über das Scharnier verbunden sind.

9. Verfahren zur Montage eines Möbelstücks nach Anspruch 8, umfassend:
- einen Schritt des Aufstellens durch Verschwenken von zumindest der ersten Wand (1) bezüglich der zweiten Wand (2), der an die erste Wand (1) angrenzt; und
- einen Schritt des Einschnappens von dem ersten Haken des zweiten Teils des Systems zur dauerhaften Befestigung (8000) in die Aufnahmeausnehmung von dem ersten Teil des Systems zur dauerhaften Befestigung (8000).

10. Montageverfahren nach Anspruch 9, umfassend einen vorhergehenden Schritt des Anbringens eines Teils aus erstem Teil und zweitem Teil des Systems zur dauerhaften Befestigung (8000) an eine aus erster Wand (1) bzw. zweiter Wand (2), wobei der vorhergehende Schritt einen Schritt des Eindrückens von dem Haltesystem des Teils in eine Nut umfasst, die in der entsprechenden Wand (1, 2) ausgebildet ist.

## Claims

1. Guiding and fixing assembly, comprising a permanent fixing system (1000) for a furniture item and a hinge (1300), the permanent fixing system (1000) being configured in order to rigidly connect a first panel to a second panel of the furniture item in an assembled position, the permanent fixing system (1000) comprising at least one first part (1100), configured in order to be fixed to the first panel, and one second part (1200), configured in order to be fixed to the second panel and to fit into the first part (1100),
- the first part (1100) comprising:
∘ a body (1110) comprising at least one first face (1111),
∘ a receiving housing (1120) for a first barbed clip (1220) of the second part (1200), the housing (1120) being hollow from the first face of the body of the first part and extending into the body of the first part, the housing (1120) comprising a retaining stop (1121) for the first barbed clip, configured in order to retain the first barbed clip permanently after it has been fitted in, and a receiving compartment (1123) for a head (1223) of the first barbed clip (1220) formed between a base (1124) of the housing (1120) and the stop (1121), and
∘ a retaining system (1130) of the first part on the first panel formed on at least one face of the body (1110) of the first part (1100) separate from the first face (1111),
- the second part (1200) comprising:
∘ a body (1210) comprising at least one first face (1211),
∘ at least the first barbed clip (1220) being configured in order to fit into the receiving housing (1120) of the first part, the first barbed clip projecting from the first face (1211) of the body of the second part and comprising at least one head (1223) and one arm (1222) which is connected to the first face (1211) and supports the head, and the head comprising at least one flange (1221) configured in order to be turned back during the insertion of the head (1223) into the housing (1120) and in order to spread out again when the head (1223) is in the receiving compartment (1123) of the housing,
∘ a retaining system (1230) of the second part to the second panel formed on at least one face of the body (1210) of the second part (1200) separate from the first face (1211),
- the hinge (1300) being configured in order to pivotably guide an insertion of the first barbed clip (1220) of the second part (1200) into the corresponding receiving housing (1120) of the first part (1100), the first barbed clip (1220) and the receiving housing (1120) being curved respectively in the sectional plane perpendicular to at least one face of the body (1110) of the first part (1100) and to at least one face of the body (1210) of the second part (1200) in order to facilitate the insertion of the first barbed clip into the housing.

2. Assembly according to claim 1, **characterised in that** the permanent fixing system (1000) comprises the hinge (1300), and **in that** the hinge (1300), the first part (1100) and the second part (1200) are formed in one piece.

3. Assembly according to claim 2, **characterised in that** the hinge (1300) has a web (1331); the web (1331) and at least a portion of the first part (1100) and at least a part of the second part (1200) being extruded by injection moulding.

4. Assembly according to any one of claims 1 to 3, **characterised in that** the retaining system (1130) of the first part (1100) on the first panel comprises a surface (1112) having a unidirectional axial retention geometry.

5. Assembly according to any one of claims 1 to 4, **characterised in that** the retaining system (1230) of the second part (1200) on the second panel comprises a surface (1212) having a unidirectional axial retention geometry.

6. Assembly according to any one of claims 1 to 5, **characterised in that** the second part (4200) comprises a first portion (4400) and a second portion (4500),
- the first portion (4400) comprising:
∘ a body (4410) 4410) having a first face (4411) and a second face (4412),
∘ the first barbed clip (4420) projecting from the first face (4411) of the body of the first portion,
∘ a second barbed clip (4440) being configured in order to fit into the receiving housing (4520) of the second portion (4500), the second barbed clip (4440) projecting from the second face (4412) of the body of the first part (4400) and comprising at least a head and an arm which is connected to the first face and supports the head, and the head comprising at least one flange configured in order to be turned back during the insertion of the head into the housing and in order to spread out again when the head is in a receiving compartment of the housing (4520) of the second portion (4500),
- the second portion (4500) comprising:
∘ a body (1210) comprising at least one first face,
∘ the receiving housing (4520) for the second barbed clip (4440) of the first portion, the housing (4520) being hollow from the first face of the body of the second portion and extending into the body of the second portion, the housing (4520) comprising a retaining stop for the second barbed clip, configured in order to retain the second barbed clip (4440) permanently after it has been fitted in, and the receiving compartment for the head of the second barbed clip being formed between a base of the housing and the stop, and
∘ the retaining system for the second part on the second panel formed on at least one face of the body of the second portion separate from the first face.

7. Assembly according to claim 6, **characterised in that** the first face (4411) of the body (4410) of the first portion (4400) is separate from the second face (4412) of the body (4410) of the first portion (4400), the first barbed clip (4420) and the second barbed clip (4440) of the first portion (4400) of the second part (4200) being back to back.

8. Furniture item comprising at least one assembly according to any one of claims 1 to 7, the furniture item comprising a first wall (1), forming a first panel connected to the first part of the permanent fixing system (8000), and a second wall (2), adjacent to the first wall (1) and forming a second panel connected to the second part of the permanent fixing system (8000), and the first wall (1) and the second wall (2) being connected by the hinge.

9. Method of assembly of a furniture item according to claim 8, comprising:
- a step of adjustment by pivoting of at least the first wall (1) with respect to the second wall (2) adjacent to the first wall (1); and
- a step of snap-fitting of the first barbed clip of the second part of the permanent fixing system (8000) in the housing of the first part of the permanent fixing system (8000).

10. Method of assembly according to claim 9, comprising a preceding step of attaching a part between the first part and the second part of the permanent fixing system (8000) to one of the first wall (1) or the second wall (2), the preceding step comprising a step of pressing the retaining system of the part into a groove formed in the corresponding wall (1, 2).
